# NEUE EUROPÄISCHE PATENTSCHRIFT

(11) **EP 2 564 148 B2**
(45) Veröffentlichungstag und Bekanntmachung des Hinweises auf die Entscheidung über den Einspruch: **22.08.2018**
(45) Hinweis auf die Patenterteilung: 25.11.2015
(21) Anmeldenummer: 11712773.8
(22) Anmeldetag: 05.04.2011
(51) Int. Cl.: F41H 5/013, F16B 37/06

(54) **BEFESTIGUNGSVORRICHTUNG**
FASTENING DEVICE
DISPOSITIF DE FIXATION

(30) Priorität: 28.04.2010 DE 102010018486
(43) Veröffentlichungstag der Anmeldung: 06.03.2013
(73) Patentinhaber: Rheinmetall Landsysteme GmbH, 29345 Unterlüß (DE)
(72) Erfinder: ZEISE, Ralf, 24105 Kiel (DE); BÖCKMANN, Frank, 24623 Brokenlande (DE); HASS, Frank, 24226 Heikendorf (DE); KOCH, Ralf, 24232 Schönkirchen (DE)
(74) Vertreter: Dietrich, Barbara
(86) Internationale Anmeldenummer: PCT/EP2011/001676
(87) Internationale Veröffentlichungsnummer: WO 2011/134586

(56) Entgegenhaltungen:
- EP-A1- 0 857 526
- EP-A1- 1 006 034
- EP-A1- 1 347 183
- EP-A1- 2 077 168
- EP-A2- 1 190 895
- EP-B1- 1 291 610
- CN-U- 201 439 793
- DE-A1- 3 319 244
- DE-A1- 10 258 614
- DE-A1-102004 050 830
- DE-A1-102006 046 080
- DE-A1-102007 057 880
- DE-C1- 2 542 142
- DE-C1- 19 930 852
- DE-C3- 2 935 692
- DE-U1-202004 001 625
- DE-U1-202005 000 198
- DE-U1-202005 000 198
- FR-A1- 2 811 484
- GB-A- 732 714
- JP-A- H07 042 721
- JP-A- 2010 000 538
- US-A- 3 045 736
- US-A- 3 048 160
- US-A- 4 167 889
- US-A- 4 905 569
- US-A- 4 961 368
- US-A- 5 033 357
- US-A- 5 131 314
- US-A- 5 895 584
- US-A1- 2009 169 327
- US-A1- 2010 226 731
- US-B1- 6 187 451
- engl. Maschinenübersetzung der Beschreibung der CN 2014 39793 (D6)
- STÜSSI F.: 'Entwurf und Berechnung von Stahlbauten', Bd. 1. BAND, 1958, SPRINGER-VERLAG, BERLIN Seite 163
- KINDMANN R. ET AL: 'Verbindungen im Stahl-und Verbundbau', 2003, WILHELM ERNST & SOHN VERLAG Seiten 316 - 318
- DIN V ENV 1993-1-1 (EC 3)- Stahlbau; S.8.1, S.8.61-8.63; veröffentlicht April 1993
- https://de.wikipedia.org/wiki/Mäander in der Version vom 05-04-2010

## Beschreibung

Die Erfindung betrifft, eine Vorrichtung zur Befestigung von Platten, ballistischen Schutzelementen, Ausrüstungsgegenständen, Staukisten und dergleichen an einem Objekt, insbesondere an einem gegen Waffen- oder Mineneinwirkung zu schützenden Objekt, die einen an dem Objekt befestigbaren Schweißbutzen umfasst, dessen dem Objekt zugewandter Bodenbereich randseitig über eine Schweißverbindung mit dem Objekt verbindbar ist, und der wenigstens eine Gewindebohrung aufweist.

Eine derartige Befestigungsvorrichtung ist beispielsweise aus dem Dokument DE 20 2005 000 198 U1 bekannt. Als nachteilig hat sich bei Verwendung bekannter Vorrichtungen erwiesen, dass insbesondere Schweißnähte, mit denen die beispielsweise an der Außenwand eines gepanzerten Fahrzeuges angeordneten Schweißbutzen befestigt sind, bei einem Beschuss des Fahrzeuges oder bei einer Minendetonation brechen können. Dadurch kann es zum Ablösen der Schweißbutzen von der Fahrzeugwand und zum teilweisen Lösen und Herunterfallen der Schutzelemente etc. kommen.

Der Erfindung liegt die Aufgabe zugrunde, eine Vorrichtung der eingangs erwähnten Art anzugeben, bei welcher der Schweißbutzen durch eine sicherere Verbindung an einem zu schützenden Objekt befestigbar ist, als dieses mit bekannten Schweißbutzen möglich ist, sodass auch bei einem Beschuss des zu schützenden Objektes oder bei Mineneinwirkungen eine sichere Anordnung der ballistischen Schutzelemente und dergleichen an dem zu schützenden Objekt gewährleistet wird.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, den randseitigen Bodenbereich des Schweißbutzens, der über eine Schweißnaht mit dem zu schützenden Objekt verbunden ist, entlang seines Umfanges mäanderförmig auszubilden. Durch eine derartige mäanderförmige Kontur des randseitigen Bodenbereiches des Schweißbutzens kann die Schweißnahtlänge wesentlich größer realisiert werden, als dieses bei Verwendung bekannter Schweißbutzen möglich ist. Durch eine derart größere Schweißnahtlänge wird die Verbindungsfläche zwischen dem Schweißbutzen und dem zu schützenden Objekt erhöht, sodass die Verbindung zwischen diesen Teilen auch größere Kräfte aufnehmen kann. Die Schweißverbindung bzw. Schweißnaht kann allumfänglich oder mit Unterbrechungen eingebracht werden, sodass diese dann aus mehreren Schweißnähten bestehen kann.

Eine Gewichts- und/oder Spannungsoptimierung des erfindungsgemäßen Schweißbutzens kann dadurch erreicht werden, dass die Seitenwand des Schweißbutzens in Richtung seiner Längsachse einen ganz oder teilweise sich konisch verjüngenden Verlauf aufweist.

Ferner enthält der erfindungsgemäße Schweißbutzen auch Formelemente zum Erzielen einer besseren Lastverteilung für alle Gewindegänge. Dieses wird erfindungsgemäss durch eine Ringnut im Bereich des Einschraubendes der Gewindebohrung und gegebenenfalls zusätzlich durch eine parallel zur Mittelachse verlaufende Fase über mindestens zwei Gewindegänge des Einschraubendes erreicht. Die Nut bildet zudem eine Art Sprengring und erhöht die Elastizität der Verbindung, die Schraube kann federn, was eine bessere Sicherung der Schraube bewirkt.

Neben der besseren Verbindung zur Fahrzeugstruktur zeichnet sich der neue Butzen (Befestigungselemente) durch eine höhere Kraftaufnahme sowie einen optimalen Spannungsverlauf der Verbindung zur Fahrzeugstruktur aus. Zudem wird ein besserer Halt der montierten Platten etc. erreicht.

Weitere Einzelheiten und Vorteile der Erfindung ergeben sich aus den folgenden, anhand von Figuren erläuterten Ausführungsbeispielen. Es zeigen:
- Fig. 1:: eine perspektivische Ansicht eines ersten Ausführungsbeispiels des Schweißbutzens einer erfindungsgemäßen Vorrichtung,
- Fig. 2:: eine perspektivische Ansicht eines Ausführungsbeispiels des Schweißbutzens einer nicht erfindungsgemäßen Vorrichtung,
- Fig. 3:: den Schnitt durch eine an einem zu schützenden Objekt angeordnete erfindungsgemäße Vorrichtung mit einem an dem Objekt befestigten ballistischen Schutzelement.

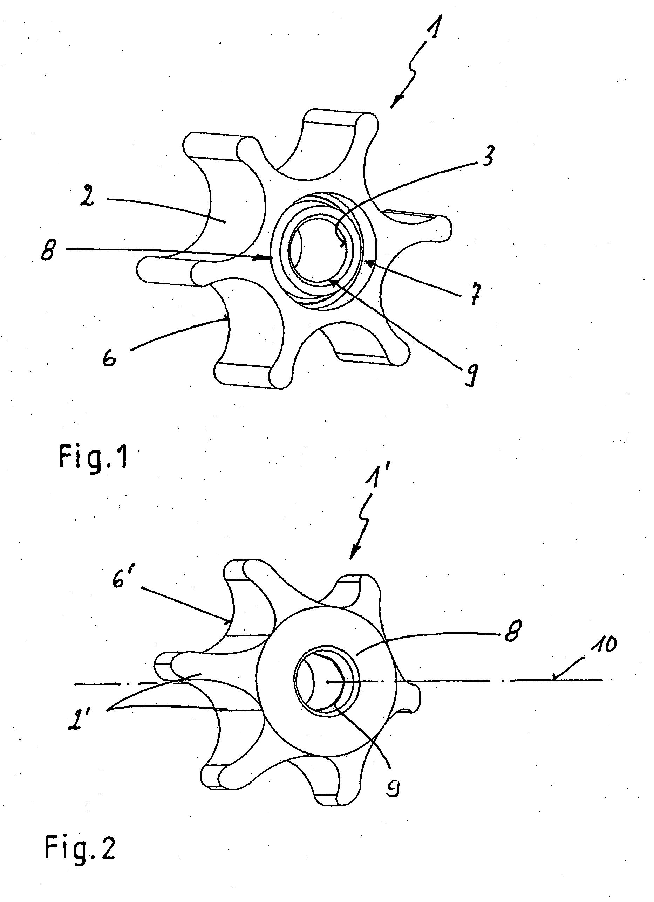

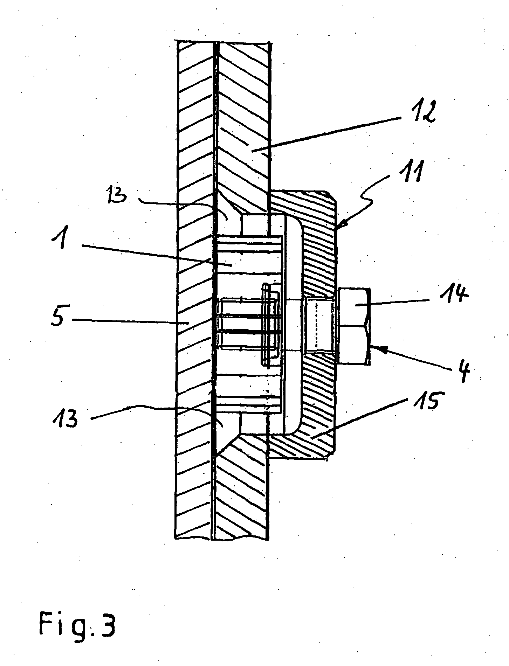

In Fig. 1 ist mit 1 ein Schweißbutzen bezeichnet, dessen Seitenwand 2 entlang seines Umfanges einen mäanderförmigen Verlauf aufweist. Der Schweißbutzen 1 enthält eine Gewindebohrung 3, in welche von außen eine Schraube 4 zur Befestigung eines ballistischen Schutzelementes 12 an einem zu schützenden Objekt 5 einschraubbar ist (Fig. 3). Die Gewindebohrung 3 kann zentrisch aber auch außermittig eingebunden sein. Je nach der geometrischen Auslegung des Schweißbutzens 1 können auch mehr als eine Gewindebohrung eingebracht sein.

Durch den mäanderförmigen Verlauf der Seitenwand 2 weist auch der dem zu schützenden Objekt 5 (Fig. 3) zugewandte randseitige Bodenbereich 6 des Schweißbutzens 1, mit dem der Schweißbutzen 1 mit dem zu schützenden Objekt 5 verschweißt werden soll, einen mäanderförmigen Verlauf auf. Dadurch kann der randseitige Bodenbereich 6 des Schweißbutzens 1 über eine wesentlich längere Schweißnaht mit dem zu schützenden Objekt 5 verbunden werden, als dieses bei Verwendung bekannter Schweißbutzen, die einen kreisförmig ausgebildeten, randseitigen Bodenbereich besitzen, möglich ist.

Wie Fig. 1 ferner entnehmbar ist, enthält der Schweißbutzen 1 eine sich um die Gewindebohrung 3 herum erstreckende, als Entlastungsnut wirkende Ringnut 7, die sich von der dem Bodenbereich gegenüberliegenden Oberseite 8, welche dem Einschraubende der Gewindebohrung entspricht, in das Innere des Schweißbutzens 1 hinein erstreckt.

Außerdem oder alternativ besitzen die ersten Gewindegänge 9 der Gewindebohrung 3 im Bereich ihres Einschraubendes 8 eine parallel zur Mittelachse verlaufende Fase.

In Fig. 2 ist ein Schweißbutzen 1' dargestellt, der zur Gewichts- und Spannungsoptimierung eine Seitenwand 2' aufweist, die von dem Bodenbereich 6' in Richtung der Längsachse 10 des Schweißbutzens 1' einen sich konisch verjüngenden Verlauf besitzt.

In Fig. 3 ist der Schnitt durch eine an einem zu schützenden Objekt 5 (beispielsweise der Seitenwand eines Panzers) angeordnete erfindungsgemäße Vorrichtung 11 mit einem an dem Objekt 5 befestigten ballistischen Schutzelement 12 dargestellt. Die erfindungsgemäße Vorrichtung 11 umfasst einen Schweißbutzen 1, wie er in Fig. 1 dargestellt ist, der mit dem Objekt 5 durch eine (umlaufende) Schweißnaht 13 verbunden ist.

In die Gewindebohrung 3 des Schweißbutzens 1 ist eine Sechskantschraube 4 eingeschraubt, deren Schraubenkopf 14 eine Druckscheibe 15 gegen das ballistische Schutzelement 12 drückt, sodass dieses kraftschlüssig an dem zu schützenden Objekt 5 anliegt.

### Bezugszeichenliste

- 1, 1': Schweißbutzen
- 2, 2': Seitenwände
- 3: Gewindebohrung
- 4: Kopfschraube, Sechskantschraube
- 5: Objekt
- 6, 6': Bodenbereich
- 7: Ringnut
- 8: Oberseite, Einschraubende
- 9: Gewindegang
- 10: Längsachse
- 11: Vorrichtung
- 12: Schutzelement
- 13: Schweißverbindung, Schweißnaht
- 14: Schraubenkopf
- 15: Druckscheibe

## Patentansprüche

1. Vorrichtung zur Befestigung von Platten, ballistischen Schutzelementen (12), Ausrüstungsgegenständen, Staukisten und dergleichen, mit einem Objekt, mit einem an dem Objekt (5) befestigbaren Schweißbutzen (1; 1'), der mit einem, dem Objekt (5) zugewandter Bodenbereich (6; 6') randseitig über eine Schweißverbindung (13) mit dem Objekt verbunden ist, und der wenigstens eine Gewindebohrung (3) aufweist, in welche von außen eine Schraube (4) einschraubbar ist, **dadurch gekennzeichnet, dass** der randseitige Bodenbereich (6; 6') des Schweißbutzens (1; 1') entlang seines Umfanges einen mäanderförmigen Verlauf aufweist und dass der Schweißbutzen (1) eine sich um die Gewindebohrung (3) herum erstreckende Ringnut (7) enthält, die sich von der dem Bodenbereich (6) gegenüberliegenden Oberseite (8) in das Innere des Schweißbutzens (1) hinein erstreckt.

2. Vorrichtung nach Anspruch 1, **dadurch gekennzeichnet, dass** eine Seitenwand (2; 2') des Schweißbutzens (1; 1') entlang ihres Umfanges einen mäanderförmigen Verlauf aufweist.

3. Vorrichtung nach Anspruch 1 oder 2, **dadurch gekennzeichnet, dass** die Seitenwand (2; 2') des Schweißbutzens (1; 1') in Richtung seiner Längsachse (10) einen sich ganz oder teilweise konisch verjüngenden Verlauf aufweist.

4. Vorrichtung nach einem der Ansprüche 1 bis 3, **dadurch gekennzeichnet, dass** mindestens die ersten Gewindegänge (9) der Gewindebohrung (3) eine parallel zur Mittelachse verlaufende Fase aufweisen.

5. Vorrichtung nach einem der Ansprüche 1 bis 4, **dadurch gekennzeichnet, dass** die Schweißverbindung (13) allumfänglich mit einer Schweißnaht und / oder mit Unterbrechungen aus mehreren Schweißnähten besteht.

## Claims

1. Apparatus for fastening plates, ballistic protective elements (12), equipment items, storage boxes and the like, with an object, with a welded slug (1; 1') which can be fastened to the object (5), is connected to the object on the edge side via a welded connection (13) by way of a bottom region (6; 6') which faces the object (5), and has at least one threaded hole (3), into which a screw (4) can be screwed from the outside, **characterized in that** the edge-side bottom region (6; 6') of the welded slug (1; 1') has a meandering course along its periphery, and **in that** the welded slug (1) comprises an annular groove (7) which extends around the threaded hole (3) and, from the upper side (8) which lies opposite the bottom region (6), extends into the interior of the welded slug (1).

2. Apparatus according to Claim 1, **characterized in that** a side wall (2; 2') of the welded slug (1; 1') has a meandering course along its periphery.

3. Apparatus according to Claim 1 or 2, **characterized in that** the side wall (2; 2') of the welded slug (1; 1') has a completely or partially conically tapering course in the direction of its longitudinal axis (10).

4. Apparatus according to one of Claims 1 to 3, **characterized in that** at least the first thread turns (9) of the threaded hole (3) have a bevel which runs parallel to the centre axis.

5. Apparatus according to one of Claims 1 to 4, **characterized in that** the welded connection (13) consists all around the periphery of one welded seam and/or of a plurality of welded seams with interruptions.

## Revendications

1. Dispositif destiné à la fixation de plaques, d'éléments de protection balistiques (12), d'objets d'équipement, de caisses de rangement ou similaires, avec un objet, avec un rond de soudure (1 ; 1') pouvant être fixé sur l'objet (5), qui est relié à l'objet par un fond (6 ; 6') tourné vers l'objet (5) par une liaison soudée (13) sur le bord, et qui présente au moins un filetage (3) dans lequel une vis (4) peut être vissée par l'extérieur, **caractérisé en ce que** le fond (6 ; 6') sur le bord du rond de soudure (1 ; 1') présente un tracé sinueux sur son périmètre, et **en ce que** le rond de soudure (1) comporte une rainure annulaire (7) s'étendant tout autour du perçage fileté (3) qui s'étend de la face supérieure (8) opposée au fond (6) jusque dans l'intérieur du rond de soudure (1).

2. Dispositif selon la revendication 1, **caractérisé en ce qu'**une paroi latérale (2 ; 2') du rond de soudure (1 ; 1') présente un tracé sinueux sur son périmètre.

3. Dispositif selon la revendication 1 ou 2, **caractérisé en ce que** la paroi latérale (2 ; 2') du rond de soudure (1 ; 1') présente un tracé se réduisant totalement ou partiellement de façon conique en direction de son axe longitudinal (10).

4. Dispositif selon l'une des revendications 1 à 3, **caractérisé en ce qu'**au moins les premiers filets (9) du perçage fileté (3) présentent un chanfrein parallèle à l'axe médian.

5. Dispositif selon l'une des revendications 1 à 4, **caractérisé en ce que** la liaison filetée (13) est composée sur tout le périmètre d'un cordon de soudure et/ou de plusieurs cordons de soudure discontinus.
